# EUROPÄISCHE PATENTSCHRIFT

(11) **EP 3 822 526 B1**
(45) Veröffentlichungstag und Bekanntmachung des Hinweises auf die Patenterteilung: **15.02.2023**
(21) Anmeldenummer: 20207034.8
(22) Anmeldetag: 11.11.2020
(51) Int. Cl.: F16K 27/02, F16K 31/06, B01D 35/04, B01D 46/00, B01D 46/10, F02M 61/16, F02M 63/00

(54) **BAUGRUPPE, VENTIL UND VERFAHREN ZUM MONTIEREN DER BAUGRUPPE**
ASSEMBLY, VALVE AND METHOD FOR MOUNTING THE ASSEMBLY
MODULE, SOUPAPE ET PROCÉDÉ DE MONTAGE DU MODULE

(30) Priorität: 13.11.2019 DE 102019130675
(43) Veröffentlichungstag der Anmeldung: 19.05.2021
(73) Patentinhaber: SVM Schultz Verwaltungs-GmbH & Co. KG, 87700 Memmingen (DE)
(72) Erfinder: Hasel, Claus Peter, 87700 Memmingen (DE); Weiß, Bernhard, 87737 Boos (DE)
(74) Vertreter: Patentanwälte Olbricht, Buchhold, Keulertz Partnerschaft mbB

(56) Entgegenhaltungen:
- WO-A1-2018/075326
- CN-U- 203 598 583
- CN-U- 209 213 143
- DE-A1- 2 318 190
- DE-A1- 19 856 520
- DE-B- 1 185 876
- FR-A- 1 417 842
- JP-A- H09 108 520
- US-A1- 2003 051 455

## Beschreibung

Die Erfindung betrifft eine Baugruppe nach Anspruch 1, ein Ventil mit dieser Baugruppe gemäß Anspruch 7, ein Verfahren zum Montieren der Baugruppe mit den Merkmalen des Anspruchs 8 sowie ein Verfahren zum Montieren eines Ventils mit den Merkmalen des Anspruchs 9.

Es sind Baugruppen, wie beispielsweise Filteranordnungen, mit mehreren entlang einer Achse hintereinander bei deren Montage stapelbaren Bauteilen bekannt. Jedes dieser Bauteile weist Abmessungen auf, die in einem Maßtoleranzbereich liegen. Im Stand der Technik ist es daher oftmals notwendig, diese mehreren Bauteile zu einer Baugruppe so anzuordnen, dass diese nach durchgeführter Montage eine in einem vorgegebenen Maßtoleranzbereich der Baugruppe liegende Nettolänge aufweist. Jedoch können einzelnen gleichartigen Bauteile aufgrund der eigenen Maßtoleranzgrenzen unterschiedliche Abmessungen, wie eine axiale Länge, aufweisen. Dies führt gerade im Bereich von mikrometergenauen Maßtoleranzgrenzen für die Baugruppe zu erheblichem Montage- und Kontrollaufwand bei der Montage der mehreren Bauteile zu einer Baugruppe. Bisher werden daher die Maßtoleranzgrenzen der einzelnen Bauteile immer weiter verkleinert, um die Maßtoleranzgrenzen der Baugruppe einhalten zu können.

DE19856520 offenbart eine Baugruppe gemäß dem Oberbegriff des Anspruchs 1. CN209213143U offenbart ein Ventil mit einer Filteranordnung und DE2318190 offenbart eine Filteranordnung.

Der Erfindung liegt daher die Aufgabe zugrunde, eine Baugruppe zu schaffen, bei welcher mit erheblich geringerem Aufwand und signifikant reduzierten Kosten sehr enge Maßtoleranzgrenzen der Baugruppe eingehalten werden können.

Hauptmerkmale der Erfindung sind in den Ansprüchen 1, 7, 8 und 9 angegeben. Ausgestaltungen sind Gegenstand der entsprechend abhängigen Ansprüche.

Erfindungsgemäß wird eine Baugruppe vorgeschlagen, umfassend ein erstes äußeres Bauteil, ein zweites äußeres Bauteil und ein bezogen auf eine Stapelrichtung zwischen den beiden äußeren Bauteilen angeordnetes Mittelbauteil, wobei das erste äußere Bauteil zumindest einen ersten Vorsprung aufweist, der sich von einer dem Mittelbauteil zugewandten Außenfläche des ersten äußeren Bauteils in der Stapelrichtung zu dem Mittelbauteil erstreckt, und das Mittelbauteil verformbar ausgebildet und infolge einer Kraftwirkung des zumindest einen ersten Vorsprungs verformt ist.

Zur Lösung oben bezeichneter Aufgabe schlägt die Erfindung unter anderem also eine Baugruppe vor, bestehend aus mehreren einzelnen Bauteilen, die eine Anordnung für einen Toleranzausgleich in Stapelrichtung aufweist. Die Stapelrichtung liegt in Längsrichtung, wobei die Baugruppe eine Längsachse aufweisen kann, welche in Stapelrichtung verlaufen kann und/oder als Längsmittelachse ausgebildet sein kann. "Stapeln" bedeutet im Kontext der Anmeldung ein Anordnen von Bauteilen entlang der Stapelrichtung benachbart zueinander. Ein Stapeln muss nicht zwingen in Vertikalrichtung erfolgen, auch ein Stapeln in Horizontalrichtung gilt als Stapeln im erfindungsgemäßen Sinn. Die von außen aufgebrachte Kraftwirkung auf das Mittelbauteil soll in Stapelrichtung einwirken.

Jedes der drei Bauteile weist eine eigene Abmessung in Stapelrichtung auf, wobei jede dieser Abmessungen in einem eigenen Maßtoleranzbereich liegen kann. Die Baugruppe, welche aus diesen drei Bauteilen gebildet ist, soll in Stapelrichtung innerhalb einer eigenen Maßtoleranzgrenze liegen. Für den Fall, dass die Summe der Abmessungen der drei Bauteile in Stapelrichtung den Maßtoleranzbereich der Baugruppe überschreitet, kommt die Toleranzausgleichsfunktion nach der Erfindung zum Tragen. Da nämlich das Mittelbauteil verformbar ausgebildet ist, kann es in gewissem Maße von dem Vorsprung derart verformt werden, dass eine Baugruppenabmessung in Stapelrichtung reduziert werden und so die obere Maßtoleranzgrenze der Baugruppe eingehalten werden kann. Das Mittelbauteil kann elastisch und/oder plastisch verformbar sein.

Der Vorsprung dient dazu, das Mittelbauteil lediglich lokal zu verformen. Ohne eine verformende Kraftwirkung liegt der Vorsprung an einer dem ersten äußeren Bauteil zugewandten Außenfläche des Mittelbauteils an. Zwischen dieser dem ersten äußeren Bauteil zugewandten Außenfläche des Mittelbauteils und der dem Mittelbauteil zugewandten Außenfläche des ersten äußeren Bauteils ist somit ein Spalt ausgebildet. Eine das Mittelbauteil verformende Kraftwirkung führt nun dazu, dass der Vorsprung in das Mittelbauteil eindringt und sich der Spalt zumindest in Stapelrichtung verringert. Die lediglich lokale Verformung bedarf zudem eines geringeren Kraftaufwandes.

Die Baugruppe ist sandwichartig aufgebaut und weist das verformbare Mittelbauteil als Toleranzausgleichmittel und zwei gegebenenfalls unverformbare äußere Bauteile auf, um eine sichere Anlage von Anlagepartnern daran zu gewährleisten, und um die Kraftwirkung auf das Mittelbauteil zu übertragen.

Die erfindungsgemäße Baugruppe kann gemäß einer Weiterbildung derart ausgebildet sein, dass das zweite äußere Bauteil zumindest einen zweiten Vorsprung aufweist, der sich von einer dem Mittelbauteil zugewandten Außenfläche des zweiten äußeren Bauteils in der Stapelrichtung zu dem Mittelbauteil erstreckt, und das Mittelbauteil infolge der Kraftwirkung des zumindest einen zweiten Vorsprungs verformt ist. Gemäß dieser Ausführung ist das Mittelbauteil also von beiden Seiten bezüglich der Stapelrichtung von Vorsprüngen verformt oder verformbar. Die doppelte Menge an Vorsprüngen führt dazu, bezogen auf die einfache Menge an Vorsprüngen, dass jeder der beiden Vorsprünge nur noch eine halbe Eindringtiefe aufweisen muss, während ein einziger Vorsprung bei gleichem Toleranzausgleich eine ganze Eindringtiefe aufweist. Die doppelte Menge an Vorsprüngen dient auch der Spannungsreduktion im Mittelbauteil und dazu, dass grundsätzlich härtere Materialien hierfür verwendet werden können.

Gemäß einer Weiterbildung der erfindungsgemäßen Baugruppe sind der zumindest eine erste Vorsprung und der zumindest eine zweite Vorsprung in einer sich zu der Stapelrichtung senkrecht erstreckenden Breitenrichtung zueinander beabstandet angeordnet. Dadurch können über die Vorsprünge Kraftmomente in das Mittelbauteil eingetragen werden, um es entsprechend zu verformen. Bei einem Verbiegen des Mittelbauteils kann beispielsweise ein Vorsprung als Lager dienen, um welches ein Abschnitt des Mittelbauteils durch den anderen Vorsprung verbogen wird. Durch den Abstand der Vorsprünge zueinander können also durch die in Stapelrichtung gerichtete Kraftwirkung weitere Kräfte erzeugt werden und auf das Mittelbauteil wirken, welche nicht lediglich entlang der Stapelrichtung wirken, was zu einer größeren Flexibilität hinsichtlich der Mittelbauteilgeometrie führt.

Es ist bei einer weiteren Ausgestaltung der Baugruppe denkbar, dass der zumindest eine erste Vorsprung und der zumindest eine zweite Vorsprung mit dem Mittelbauteil in einer infolge der Verformung des Mittelbauteils formschlüssigen Anlage sind. Dies kann beispielsweise dadurch gewährleistet werden, dass die Vorsprünge durch die Kraftwirkung in das Mittelbauteil eingedrückt werden und dort eine Ausnehmung einformen, welche ihrer Außenform entspricht. Der Formschluss führt zu einem sicheren Halt und verhindert ein Verrutschen des Mittelbauteils gegenüber einem oder beiden äußeren Bauteilen, was zu einer kompakten Baugruppe führt.

Alternativ oder zusätzlich bezüglich der obigen Absätze kann die Baugruppe nach der Erfindung auch derart gestaltet sein, dass zwischen der dem Mittelbauteil zugewandten Außenfläche des ersten äußeren Bauteils und dem Mittelbauteil und/oder der dem Mittelbauteil zugewandten Außenfläche des zweiten äußeren Bauteils und dem Mittelbauteil jeweils ein Spalt gebildet ist. Dieser Spalt dient als Raumreservoir, in welches das Mittelbauteil eindringen kann, sofern es durch die Kraftwirkung verformt wird und/oder welches durch die Kraftwirkung verkleinert werden kann, um eine Gesamtlänge der Baugruppe zu reduzieren.

Es ist auch denkbar, dass jedes der drei Bauteile (erstes äußeres Bauteil, Mittelbauteil und zweites äußeres Bauteil) der Baugruppe eine Zylinderform aufweist und diese drei Bauteile gemeinsam eine Zylinderachse definieren, welche sich in der Stapelrichtung erstreckt. Mittels der Zylinderform können das erste äußere Bauteil, das Mittelbauteil und das zweite äußere Bauteil bezüglich der Zylinderachse zentrierbar und daher koaxial zueinander angeordnet sein. Dies führt zu einer gleichmäßigen Verformung des Mittelbauteils und lässt eine gleichmäßige Längenreduktion der Baugruppenlänge über deren gesamten Querschnitt zu.

Die Baugruppe kann weiterbildungsgemäß so ausgestaltet sein, dass der zumindest eine erste Vorsprung und/oder der zumindest eine zweite Vorsprung eine Ringform aufweist und sich bezogen auf die Stapelrichtung in einer Umfangsrichtung erstreckt und/oder der zumindest eine erste Vorsprung und/oder der zumindest eine zweite Vorsprung als eine Rippe oder als eine Spitze ausgebildet ist/sind und/oder eine Spitze aufweisen und/oder im Querschnitt gesehen dreieckig oder spitz ausgebildet ist. Eine derartige Ausgestaltung der Vorsprünge führt zu einer vorteilhaften Kerbwirkung und zu einem leichten Eindringen in das Mittelbauteil, weshalb nur geringe Kräfte nötig sind, um das Mittelbauteil zu verformen und zumindest eines der äußeren Bauteile relativ bezüglich des Mittelbauteils zu verschieben. Die Ringform des Vorsprungs kann auch als Kranz aufgefasst werden, der koaxial zu der Längsachse der Baugruppe oder zu der Zylinderachse ausgerichtet ist. Eines oder beide äußeren Bauteile können jeweils eine oder mehrere als Spitzen ausgebildete Vorsprünge umfassen. Diese können gleichsam auf einer zur Längsachse koaxialen Kreisbahn angeordnet sein.

Alternativ oder zusätzlich bezüglich der obigen Absätze kann die Baugruppe nach der Erfindung in einem ersten Zustand, vor der Kraftwirkung, in Stapelrichtung eine erste Ausdehnung aufweisen und in einem zweiten Zustand, nach und/oder während der Kraftwirkung, in Stapelrichtung eine zweite Ausdehnung aufweist, wobei die zweite Ausdehnung geringer ist als die erste Ausdehnung. Mit anderen Worten ist die Baugruppe zumindest von dem ersten in den zweiten Zustand verstellbar. Es ist also denkbar, dass die Baugruppe vor deren Montage oder deren Einbau in ein weiteres Bauteil, beispielsweise in ein Ventilgehäuse, den ersten Zustand aufweist und danach die Kraft einwirkt, um den zweiten Zustand herzustellen, welcher sich durch eine Längenverkürzung gegenüber dem ersten Zustand auszeichnet. Bei einem weitgehend plastisch verformbaren Mittelbauteil reicht eine einmalige Kraft aus, um das Mittelbauteil dauerhaft zu verformen. Ist jedoch der elastische Anteil des Materials des Mittelbauteils entsprechend groß, muss die Kraftwirkung dauerhaft aufgebracht werden. Es ist denkbar, dass die Kraftwirkung auf die Baugruppe aufgebracht wird und dieser zweite Zustand dann fixiert wird, beispielsweise mittels Festklemmen der Baugruppe.

Das Mittelbauteil der erfindungsgemäßen Baugruppe ist derart ausgebildet und/oder angeordnet ist, dass es vor der Kraftwirkung im Längsschnitt einen Querschnittsverlauf aufweist, welcher abschnittweise gegenüber eine Querebene versetzt verläuft, und einen tellerfederförmigen Querschnittsverlauf aufweist. Das Mittelbauteil mit einem abschnittweise gegenüber einer Querebene versetzt verlaufendem Querschnittsverlauf ist erst durch entsprechend ausgebildete und/oder angeordnete Vorsprünge abschnittsweise in Richtung der Querebene verformbar oder verbiegbar. Insbesondere bei letzterer Ausgestaltung des Mittelbauteils wird durch die Kraftwirkung eine Vorspannung in das Mittelbauteil eingetragen, welche einen sicheren Sitz gewährleisten kann.

Erfindungsgemäß ist die Baugruppe als Filteranordnung ausgebildet. Vorzugsweise kann die Baugruppe zum Einsetzen in eine Ausnehmung eines Ventilgehäuses eines Ventils ausgebildet sein. Erfindungsgemäß umfasst das Mittelbauteil ein Filtersieb und das zweite äußere Bauteil ist als Filterträger ausgebildet. Dadurch erfüllt das Mittelbauteil eine Doppelfunktion. Zum einen kann es das Filtersieb tragen, zum anderen kann es dem Toleranzausgleich dienen. Die reduziert die Anzahl benötigter Einzelteile.

Alternativ oder zusätzlich bezüglich der obigen Absätze kann die Baugruppe eine Dichtung umfassen, welche an einer von dem Filtersieb abgewandten Seite des Filterträgers bezogen auf die Stapelrichtung benachbart zu dem Filterträger und in Anlage mit dem Filterträger angeordnet ist. Die Dichtung kann als Dichtungsring ausgebildet sein und ein endseitiges Bauteil der Baugruppe bilden.

Vorgeschlagen wird zudem ein Ventil mit einem Ventilgehäuse, wobei in einer Ausnehmung des Ventilgehäuses eine erfindungsgemäße Baugruppe angeordnet ist, wobei eine Scheibe, vorzugsweise eine zweite Ventilscheibe des Ventils, das erste Bauteil bildet. Dadurch kann die Baugruppe, welche auch als Filteranordnung ausgebildet sein kann, derart in das Ventil integrierbar sein, dass sich das Ventil und die Baugruppe einzelne Bauteile funktional teilen - hier die zweite Ventilscheibe des Ventils bzw. das erste Bauteil der Baugruppe. Dies führt zur Senkung von Einzelteilmengen und zur Reduzierung von Fehlerquellen bei der Montage und dem Betrieb. Die bezüglich der Baugruppe bereits beschriebenen Vorteile ergeben sich in gleicher Weise auch für das Ventil, worauf hiermit verwiesen wird.

Das Ventil nach der Erfindung kann derart ausgestaltet sein, dass eine Außenfläche der Dichtung in einer Tiefenrichtung der Ausnehmung zumindest nach Krafteinwirkung einen definierten Versatz zu einer Außenfläche des Ventilgehäuses aufweist. Dadurch steht die Dichtung gegenüber der Außenfläche des Ventilgehäuses etwas hervor, wodurch die Dichtung durch einen Presspartner komprimiert werden kann, um eine dichte Verbindung zu realisieren. Vorgeschlagen wird zudem ein Elektromagnetventil, welches gekennzeichnet ist durch einen elektromagnetischen Aktuator und ein an dem elektromagnetischen Aktuator fixiertes erfindungsgemäßes Ventil. Die bezüglich der Baugruppe bereits beschriebenen Vorteile ergeben sich in gleicher Weise auch für das Elektromagnetventil, worauf hiermit verwiesen wird.

Vorgeschlagen wird zudem ein Verfahren zum Montieren einer erfindungsgemäßen Baugruppe, umfassend die Schritte:
a) Bereitstellen eines ersten äußeren Bauteils der Baugruppe;
b) Festlegen der Stapelrichtung der Baugruppe bezogen auf das erste äußere Bauteil;
c) Anordnen eines Mittelbauteils der Baugruppe bezogen auf die Stapelrichtung der Baugruppe benachbart zu dem ersten äußeren Bauteil;
d) Anordnen eines zweiten äußeren Bauteils der Baugruppe bezogen auf die Stapelrichtung benachbart zu dem Mittelbauteil;
e) Beaufschlagen des Mittelbauteils, bevorzugt des äußeren zweiten Bauteils, mit einer in der Stapelrichtung wirkenden Kraft, derart, dass sich das Mittelbauteil von zumindest einem ersten Vorsprung, der sich von einer dem Mittelbauteil zugewandten Außenfläche des ersten äußeren Bauteils in der Stapelrichtung erstreckt, infolge der Kraftwirkung verformt wird.

Hierdurch kann die erfindungsgemäße Baugruppe in einfacher und kostengünstiger Weise hergestellt und montiert werden. Die bezüglich der Baugruppe bereits beschriebenen Vorteile ergeben sich in gleicher Weise auch für das Verfahren, worauf hiermit verwiesen wird.

Alternativ oder zusätzlich bezüglich der obigen Absätze kann das Verfahren kann auch derart ausgestaltet sein, dass das Mittelbauteil von zumindest einem zweiten Vorsprung, der sich von einer dem Mittelbauteil zugewandten Außenfläche des zweiten äußeren Bauteils in der Stapelrichtung erstreckt, infolge der Kraftwirkung verformt wird. Die bezüglich der Baugruppe und insbesondere des zweiten Vorsprungs bereits beschriebenen Vorteile ergeben sich in gleicher Weise auch für das Verfahren, worauf hiermit verwiesen wird.

Alternativ oder zusätzlich bezüglich der obigen Absätze kann gemäß einer Weiterbildung des Verfahrens durch das Verformen des Mittelbauteils eine vorbestimmte Ausdehnung der Baugruppe bezogen auf die Stapelrichtung eingestellt werden. Die vorbestimmte Ausdehnung kann beispielsweise innerhalb einer zuvor definierten Toleranzgrenze der Baugruppe liegen. Vorgeschlagen wird zudem ein Verfahren zum Montieren eines Ventils, umfassend die Schritte:
a) Bereitstellen eines Ventilgehäuses;
b) Anordnen einer Ventileinheit in einer Ausnehmung des Ventilgehäuses;
c) Anordnen einer Baugruppe als Filteranordnung in der Ausnehmung bezogen auf die Tiefenrichtung benachbart zu der Ventileinheit und in Anlage mit der Ventileinheit, wobei die zweite Ventilscheibe der Ventileinheit ein der Ventileinheit und der Filteranordnung gemeinsames Bauteil ist;
d) Beaufschlagen der Filteranordnung, insbesondere des äußeren Bauteils der Filteranordnung, mit einer in der Tiefenrichtung wirkenden Kraft;
e) Verformen des Mittelbauteils infolge der Kraftwirkung derart, dass die Filteranordnung in der Tiefenrichtung der Ausnehmung eine verglichen mit einem unbelasteten Zustand kürzere vorbestimmte Ausdehnung aufweist.

Die Ventilscheibe kann das erste äußere Bauteil sein. Auch hierdurch wird die Erfindungsgemäße Baugruppe in der Ausführung als Filteranordnung in einfacher und kostengünstiger Weise hergestellt und montiert.

Die bezüglich der Baugruppe bereits beschriebenen Vorteile ergeben sich in gleicher Weise auch für das Verfahren, worauf hiermit verwiesen wird.

Die in Schritt c anzuordnende Baugruppe als Filteranordnung kann eine Baugruppe gemäß einem der obigen entsprechenden Absätze sein, die sich explizit oder zumindest implizit auf eine Baugruppe als Filteranordnung beziehen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
Fig. 1a eine Längsschnittansicht durch ein Elektromagnetventil, wobei das Mittelbauteil in einer nicht erfindungsgemäßen ersten Ausführungsform mit ebenem Querschnittsverlauf vor Kraftwirkung gezeigt;
Fig. 1b eine Detailansicht einer Baugruppe nach Fig. 1a gemäß der nicht erfindungsgemäßen ersten Ausführungsform;
Fig. 2a eine Längsschnittansicht durch eine nicht erfindungsgemäße Baugruppe nach einer zweiten Ausführungsform; und
Fig. 2b eine Längsschnittansicht durch eine erfindungsgemäße Baugruppe nach einer dritten Ausführungsform.

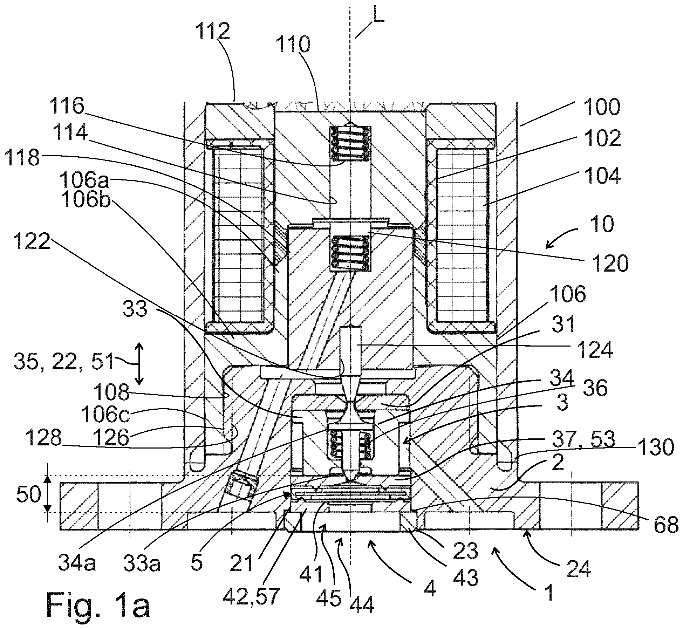

Figur 1a zeigt eine Längsschnittansicht durch ein Elektromagnetventil. Das Elektromagnetventil umfasst ein Ventil 1 und einen daran zu dessen Verstellung angeordneten elektromagnetischen Aktuator 10, welcher als monostabiler Linearmagnet in bekannter Weise ausgebildet ist. Das Elektromagnetventil ist in seiner Längsrichtung von einer Längsachse L durchgriffen.

Der elektromagnetische Aktuator 10 umfasst in einem Aktuatorgehäuse 100 einen Spulenträger 102, der eine wahlweise bestrombare Wicklung 104 trägt. Ein Polrohr 106 schließt den Aktuator 10 an seiner dem Ventil 1 zugewandten Endseite ab. Das Polrohr 106 weist drei Abschnitte 106a, 106b und 106c auf, wobei die Abschnitte 106a und 106b den Spulenträger 102 tragen und die Abschnitte 106b und 106c eine topfartige Ventilaufnahme 108 für das Ventil 1 ausbilden. An seiner dem Polrohr 106 gegenüberliegenden Endseite weist der Aktuator 10 einen Kern 110 und eine kernseitige Gehäuseplatte 112 zum Schließen des Magnetkreises auf. Der Kern 110 umfasst eine koaxial zur Längsachse L ausgebildete Kernbohrung 114 zur Aufnahme einer ersten unterbrochen dargestellten Rückstellfeder 116 auf. Zudem ist ein mittels wahlweiser Bestromung der Wicklung 104 entlang der Längsachse L verstellbarer Anker 118 vorgesehen. Der Anker 118 umfasst an seiner dem Kern 110 zugewandten Seite eine erste Ankerbohrung 120 zur Aufnahme der ersten Rückstellfeder 116. Die erste Rückstellfeder 116 stützt sich somit einerseits am Grund der Kernbohrung 114 und anderenends am Grund der ersten Ankerbohrung 120 ab. Die erste Rückstellfeder 116 ist als Druckfeder ausgebildet und spannt den Anker 118 in seine stromlos ausgefahrene Position vor. In Figur 1a ist die Wicklung im bestromten Zustand dargestellt und der Anker 118 entgegen der Federkraft der ersten Rückstellfeder 116 in seine eingefahrene Position verstellt. An seiner der ersten Ankerbohrung 120 gegenüberliegenden Seite weist der Anker 118 eine zweite Ankerbohrung 122 auf, in welche ein Ankerstößel 124 einragt und dort fixiert ist. Der Ankerstößel 124 ist mit dem Anker 118 verstellbar.

Das Ventil 1 umfasst ein Ventilgehäuse 2. Das Ventilgehäuse 2 weist an seiner Außenseite ein Befestigungsmittel auf, welches vorliegend als Außengewinde 126 ausgebildet ist. Das Außengewinde 126 greift in ein in der Ventilaufnahme 108 des Polrohrs 106 ausgebildetes Innengewinde 128 ein. Mittels einer Schweißnaht 130 ist das Ventil 1 mit dem Aktuator 10 dauerhaft verbunden. In dem Ventilgehäuse 2 ist in einer Ausnehmung 21 mit einer Tiefenrichtung 22 eine Ventileinheit 3 und eine Baugruppe 5 als Filteranordnung 4 angeordnet.

Die Ventileinheit 3 umfasst, wie in Figur 1a zu sehen, eine erste Ventilscheibe 31 mit einem ersten Ventilsitz und eine Stößelführung 33, wobei die erste Ventilscheibe 31 mit einer ersten äußeren Stirnfläche der Stößelführung 33 in Anlage ist. Bezüglich der Stößelführung 33 ist anderenends eine zweite Ventilscheibe 37 angeordnet, die einen zweiten Ventilsitz aufweist und mit einer der ersten Stirnfläche gegenüberliegenden zweiten äußeren Stirnfläche der Stößelführung 33 in Anlage ist. Die Stößelführung 33 ist als Hohlzylinder ausgebildet und weist eine entlang der Längsachse L durchgehende Ausnehmung auf. In der Ausnehmung ist in Richtung der Längsachse L ein Ventilstößel 34 verschiebbar aufgenommen. Der Ventilstößel 34 ist in einer koaxial zur Längsachse L ausgerichteten Hubrichtung 35 zwischen einer ersten Endposition und einer zweiten Endposition beweglich angeordnet, wobei er in der ersten Endposition den ersten Ventilsitz und in der zweiten Endposition den zweiten Ventilsitz abdichtet. Der Ventilstößel 34 ist als ein zylinderförmiger Stab ausgebildet, der sich in der Hubrichtung 35 erstreckt und ein erstes freies Ende zum Abdichten des ersten Ventilsitzes und ein zweites freies Ende zum Abdichten des zweiten Ventilsitzes aufweist. Die Stößelführung 33 und der Ventilstößel 34 weisen jeweils einen beabstandet zueinander angeordneten Führungsvorsprung 33a, 34a auf. In der Ausnehmung ist eine sich an den Führungsvorsprüngen 33a, 34a abstützende zweite Rückstellfeder 36 angeordnet, welches als Druckfeder ausgebildet ist und den Ventilstößel 34 in seine erste Endposition vorspannt. Der Ventilstößel 34 ist über seine dem Ankerstößel 124 zugewandte Stirnseite mit diesem schwimmend verbunden.

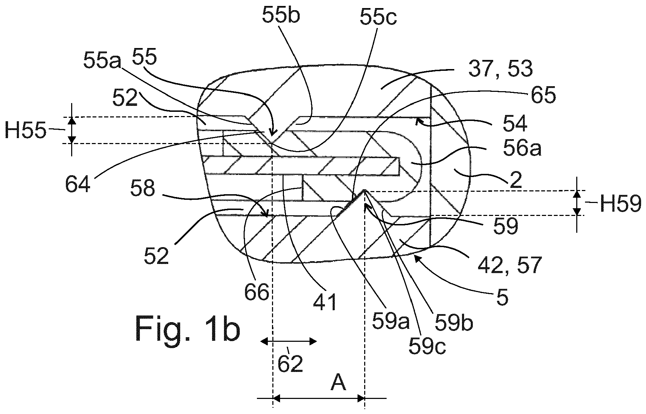

Die Baugruppe 5 umfasst in Ihrer Ausführung als Filteranordnung 4, wie insbesondere in Fig. 1b zu sehen, ein erstes äußeres Bauteil 53, ein zweites äußeres Bauteil 57 und ein bezogen auf eine Stapelrichtung 51 zwischen den beiden äußeren Bauteilen 53, 57 angeordnetes Mittelbauteil 56a. Die zweite Ventilscheibe 37 der Ventileinheit 3 bildet das erste äußere Bauteil 53 der Baugruppe 5. Die Baugruppe 5 ist ebenso wie Ventileinheit 3 in der Ausnehmung 21 angeordnet. Die drei Bauteile 53, 56a und 57 sind in Stapelrichtung 51 übereinander und unmittelbar benachbart zueinander angeordnet. Die Stapelrichtung 51 ist achsparallel zur Längsachse L ausgerichtet. Die Baugruppe 5 ist derart ausgebildet und angeordnet, dass zwischen der Außenfläche 54 des ersten äußeren Bauteils 53 und dem Mittelbauteil 56a und der Außenfläche 58 des zweiten äußeren Bauteils 57 und dem Mittelbauteil 56a jeweils ein vorzugsweise luftgefüllter Spalt 52 gebildet ist. Jedes der drei Bauteile 53, 56a und 57 weist eine Zylinderform auf und diese drei Bauteile 53, 56a und 57 definieren gemeinsam eine Zylinderachse, welche sich in Stapelrichtung 51 erstreckt.

Das erste äußere Bauteil 53 weist einen ersten Vorsprung 55 auf, welcher sich von der dem Mittelbauteil 56a zugewandten Außenfläche 54 des ersten äußeren Bauteils 53 in der Stapelrichtung 51 zu dem Mittelbauteil 56a erstreckt. Der erste Vorsprung 55 weist eine Höhe H55 in Stapelrichtung 51 und einen im Querschnitt gesehen dreieckigen Querschnitt auf. Der erste Vorsprung 55 weist eine Ringform auf, welche konzentrisch zur Längsachse L angeordnet ist bzw. sich in Umfangsrichtung der Stapelrichtung 51 erstreckt. Der erste Vorsprung 55 weist zwei Vorsprungsflanken 55a, 55b auf, welche mit der Außenfläche 54 des ersten äußeren Bauteils 53 jeweils einen stumpfen Winkel einschließen. Der Treffpunkt beider Vorsprungsflanken 55a, 55b definiert eine Vorsprungskante 55c.

Das zweite äußere Bauteil 57 weist einen zweiten Vorsprung 59 auf, welcher sich von der dem Mittelbauteil 56a zugewandten Außenfläche 58 des zweiten äußeren Bauteils 57 in der Stapelrichtung 51 zu dem Mittelbauteil 56a erstreckt. Der zweite Vorsprung 59 weist eine Höhe H59 in Stapelrichtung 51 und einen im Querschnitt gesehen dreieckigen Querschnitt auf. Die Höhe H59 kann identisch, jedoch auch geringer oder größer als die Höhe H55 sein. Der zweite Vorsprung 59 weist ebenfalls eine Ringform auf, welche konzentrisch zur Längsachse L angeordnet ist bzw. sich in Umfangsrichtung der Stapelrichtung 51 erstreckt. Der zweite Vorsprung 59 weist zwei Vorsprungsflanken 59a, 59b auf, welche mit der Außenfläche 58 des zweiten äußeren Bauteils 57 jeweils einen stumpfen Winkel einschließen. Die Winkel können identisch, jedoch auch geringer oder größer als die Winkel der Vorsprungsflanken 55a, 55b sein. Der Treffpunkt beider Vorsprungsflanken 59a, 59b definiert eine Vorsprungskante 59c.

Fig. 1b zeigt, dass der erste Vorsprung 55 und der zweite Vorsprung 59 in einer sich zu der Stapelrichtung 51 senkrecht erstreckenden Breitenrichtung 62 zueinander mit einem Abstand A beabstandet angeordnet sind bzw. die jeweiligen Vorsprungskanten 55c, 59c auf beiden Seiten der Längsachse L zueinander um die Länge bzw. den Abstand A versetzt angeordnet sind.

Das Mittelbauteil 56a ist in den Fig. 1a und 1b in seiner nicht erfindungsgemäßen ersten Ausführungsform mit ebenem Querschnittsverlauf vor Kraftwirkung gezeigt. Diese Ausführungsform weist auch während und gegebenenfalls nach Kraftwirkung den ebenen Querschnittsverlauf zumindest weitgehend, vorzugsweise ganz, auf. Alle drei Ausführungsformen des Mittelbauteils 56a, 56b, 56c sind elastisch und/oder plastisch verformbar. Die erste Ausführungsform des Mittelbauteils 56a weist eine erste Ausnehmung 64 auf, welche durch ein Eindringen des Vorsprungs 55 aufgrund der Kraftwirkung in Richtung des Kraftpfeils K in das Mittelbauteil 56a eingeformt ist. Die erste Ausführungsform des Mittelbauteils 56a weist zudem eine zweite Ausnehmung 65 auf, welche durch ein Eindringen des Vorsprungs 59 aufgrund der Kraftwirkung in Richtung des Pfeils K in das Mittelbauteil 56a eingeformt ist. Das Eindringen beider Vorsprünge 55, 59 verformt somit das Mittelbauteil 56a. Es ist zudem zu erkennen, dass das Eindringen in das Mittelbauteil 56a und das Ausformen der Ausnehmungen 64, 65 zu einem Formschluss zwischen dem ersten Vorsprung 55 und der ersten Ausnehmung 64 und zwischen dem zweiten Vorsprung 59 und der zweiten Ausnehmung 65 führen. Das Mittelbauteil 56a ist im Querschnitt U-förmig ausgebildet, umfasst ein Filtersieb 41 und umrandet das Filtersieb 41 umfangsseitig. Das Mittelbauteil 56a ist zudem ringförmig mit einem Durchlass 66 ausgebildet, durch welchen ein Fluidstrom führen kann. Das zweite äußere Bauteil 57 dient als Filterträger 42 und trägt das filterumfassende Mittelbauteil 56a und weit ebenfalls einen Durchlass auf.

Eine fakultative Dichtung 43, welche als Fixierungselement des zweiten Zustands der Baugruppe 5 dienen kann, ist an einer von dem Filtersieb 41 abgewandten Seite des Filterträgers 42 bezogen auf die Stapelrichtung 51 benachbart zu dem Filterträger 42 und in Anlage mit dem Filterträger 42 angeordnet. Das Ventilgehäuse 2 bildet in der Ausnehmung 21 eine ringförmige Stufe 68 aus, an welcher die als Ringdichtung mit einem Durchlass 45 ausgebildete Dichtung 43 anliegt. Eine Außenfläche 44 der Dichtung 43 weist in einer Tiefenrichtung 22 der Ausnehmung 21 einen definierten Versatz 23 zu einer Außenfläche 24 des Ventilgehäuses 2 auf. Eine Toleranz kann ohne die Dichtung 43 eingestellt werden.

Um Wiederholungen zu vermeiden, sollen nachfolgend lediglich die Unterschiede zu der in den Fig. 1a und 1b gezeigten ersten Ausführungsform beschrieben werden, wobei in den Figuren gleiche Elemente und Elemente mit der gleichen Funktion mit den gleichen Bezugszeichen gekennzeichnet sind.

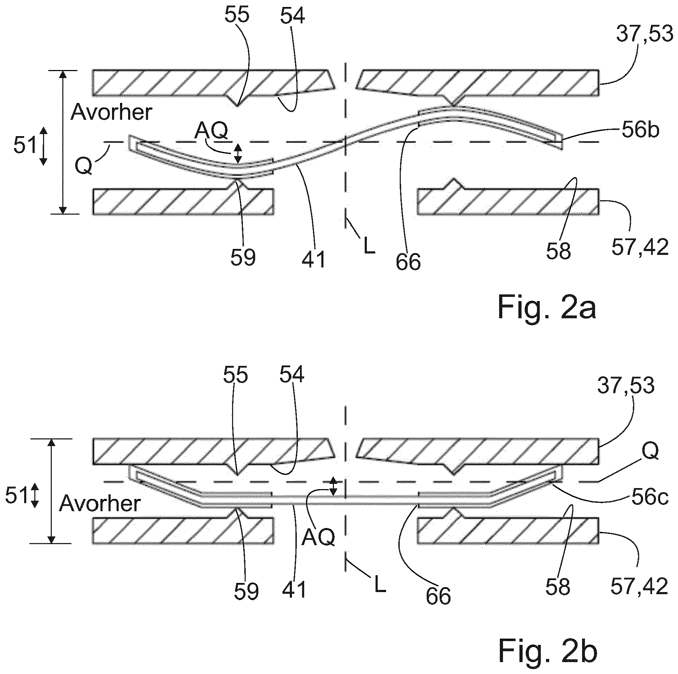

Fig. 2a zeigt eine Längsschnittansicht durch eine nicht erfindungsgemäße Baugruppe 5 mit einem Mittelbauteil 56b nach einer zweiten Ausführungsform, in Fig. 2b ist eine erfindungsgemäße dritte Ausführungsform mit Mittelbauteil 56c gezeigt. Die Baugruppe 5 ist in den Fig. 2a und 2b in einem ersten Zustand vor der Kraftwirkung dargestellt. Die benachbart zueinander angeordneten Bauteile 53, 56b bzw. 56c und 57 liegen sich gegenseitig kontaktierend aneinander an, ohne dass jedoch die Vorsprünge 55 und 59 bereits in das entsprechende Mittelbauteil 56b, 56c eindringen und/oder dieses verformen würden. Dies definiert den ersten Zustand der Baugruppe 5. Die Baugruppe 5 weist daher in Stapelrichtung 51 eine erste Ausdehnung Avorher auf. In Fig. 1a und 1b ist die Baugruppe 5 hingegen in einem zweiten Zustand während der Kraftwirkung gezeigt, wobei die Kraft dauerhaft einwirkt und die Baugruppe 5 in Stapelrichtung 51 eine zweite Ausdehnung aufweist, welche hier als vorbestimmte Ausdehnung 50 bezeichnet ist. Die zweite Ausdehnung ist geringer ist als die erste Ausdehnung. Das Filtersieb 41 kann in den Fig. 2a und 2b beispielsweise gleichsam mit dem Mittelbauteil 56b, 56c verformbar ausgebildet sein.

Die Vorsprünge 55 und 59 der jeweiligen Ringform weisen einen gleichen Abstand zur Längsachse L auf und sind diesbezüglich konzentrisch angeordnet, können jedoch auch unterschiedliche Abstände aufweisen und/oder exzentrisch zur Längsachse L angeordnet sein. Neben der Längsachse L sind die Mittelbauteile 56b, 56c auch von einer Querebene Q durchgriffen, welche mit der Längsachse L einen rechten Winkel einschließt. Einzelne Abschnitte der Mittelbauteile 56b, 56c weisen einen zur Querebene Q versetzt verlaufenden Querschnittsverlauf auf, exemplarisch gekennzeichnet durch den Abstand AQ an der Stelle der größten Entfernung. Während das Mittelbauteil 56b einen zumindest abschnittsweisen S-förmigen Querschnittsverlauf aufweist, zeichnet sich das Mittelbauteil 56c durch einen tellerfederförmigen Querschnittsverlauf aus.

Ein erstes Verfahren zum Montieren einer Baugruppe 5 soll im Folgenden beschrieben werden. Dieses Verfahren umfasst zumindest die folgenden Schritte:
a. Bereitstellen eines ersten äußeren Bauteils 53 der Baugruppe 5;
b. Festlegen der Stapelrichtung 51 der Baugruppe 5 bezogen auf das erste äußere Bauteil 53;
c. Anordnen eines Mittelbauteils 56a, 56b, 56c der Baugruppe 5 bezogen auf die Stapelrichtung 51 der Baugruppe 5 benachbart zu dem ersten äußeren Bauteil 53;
d. Anordnen eines zweiten äußeren Bauteils 57 der Baugruppe 5 bezogen auf die Stapelrichtung 51 benachbart zu dem Mittelbauteil 56a, 56b, 56c;
e. Beaufschlagen des Mittelbauteils 56a, 56b, 56c, bevorzugt des äußeren zweiten Bauteils 57, mit einer in der Stapelrichtung 51 wirkenden Kraft, derart, dass sich das Mittelbauteil 56a, 56b, 56c von zumindest einem ersten Vorsprung 55, der sich von einer dem Mittelbauteil zugewandten Außenfläche 54 des ersten äußeren Bauteils 53 in der Stapelrichtung 51 erstreckt, infolge der Kraftwirkung verformt wird.

Es ist auch erkennbar, dass das Mittelbauteil 56a, 56b, 56c von zumindest einem zweiten Vorsprung 59, der sich von einer dem Mittelbauteil 56a, 56b, 56c zugewandten Außenfläche 58 des zweiten äußeren Bauteils 57 in der Stapelrichtung 51 erstreckt, infolge der Kraftwirkung verformt wird.

Ein zweites Verfahren zum Montieren eines Ventils 1 soll im Folgenden beschrieben werden. Dieses Verfahren umfasst zumindest die folgenden Schritte:
a. Bereitstellen eines Ventilgehäuses 2;
b. Anordnen einer Ventileinheit 3 in einer Ausnehmung 21 des Ventilgehäuses 2;
c. Anordnen einer Baugruppe 5 als Filteranordnung 4 in der Ausnehmung 21 bezogen auf die Tiefenrichtung 22 benachbart zu der Ventileinheit 3 und in Anlage mit der Ventileinheit 3, wobei die zweite Ventilscheibe 37 der Ventileinheit 3 ein der Ventileinheit 3 und der Filteranordnung 4 gemeinsames Bauteil ist;
d. Beaufschlagen der Filteranordnung 4, insbesondere des äußeren Bauteils 57 der Filteranordnung 4 mit einer in der Tiefenrichtung 22 wirkenden Kraft;
e. Verformen des Mittelbauteils 56a, 56b, 56c infolge der Kraftwirkung derart, dass die Filteranordnung 4 in der Tiefenrichtung 22 der Ausnehmung 21 eine verglichen mit einem unbelasteten Zustand kürzere vorbestimmte Ausdehnung 50 aufweist.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

### Bezugszeichenliste

- 1: Ventil
- 2: Ventilgehäuse
- 3: Ventileinheit
- 4: Filteranordnung
- 5: Baugruppe
- 10: elektromagnetischer Aktuator
- 21: Ausnehmung
- 22: Tiefenrichtung
- 23: Versatz
- 24: Außenfläche
- 31: erste Ventilscheibe
- 33: Stößelführung
- 33a: Führungsvorsprung
- 34: Ventilstößel
- 34a: Führungsvorsprung
- 35: Hubrichtung
- 36: zweite Rückstellfeder
- 37: zweite Ventilscheibe
- 41: Filtersieb
- 42: Filterträger
- 43: Dichtung
- 44: Außenfläche
- 45: Durchlass
- 50: Ausdehnung
- 51: Stapelrichtung
- 52: Spalt
- 53: erstes äußeres Bauteil
- 54: Außenfläche des ersten äußeren Bauteils
- 55: erster Vorsprung
- 55a: Vorsprungsflanke
- 55b: Vorsprungsflanke
- 55c: Vorsprungskante
- 56a: mittleres Bauteil
- 56b: mittleres Bauteil
- 56c: mittleres Bauteil
- 57: zweites äußeres Bauteil
- 58: Außenfläche des zweiten äußeren Bauteils
- 59: zweiter Vorsprung
- 59a: Vorsprungsflanke
- 59b: Vorsprungsflanke
- 59c: Vorsprungskante
- 62: Breitenrichtung
- 64: erste Ausnehmung
- 65: zweite Ausnehmung
- 66: Durchlass
- 68: Stufe
- 100: Aktuatorgehäuse
- 102: Spulenträger
- 104: Wicklung
- 106: Polrohr
- 106a: Abschnitt
- 106b: Abschnitt
- 106c: Abschnitt
- 108: Ventilaufnahme
- 110: Kern
- 112: Gehäuseplatte
- 114: Kernbohrung
- 116: erste Rückstellfeder
- 118: Anker
- 120: erste Ankerbohrung
- 122: zweite Ankerbohrung
- 124: Ankerstößel
- 126: Außengewinde
- 128: Innengewinde
- 130: Schweißnaht

- A: Abstand
- AQ: Abstand
- Avorher: Ausdehnung vor Kraftwirkung
- H55: Höhe des ersten Vorsprungs
- H59: Höhe des zweiten Vorsprungs
- K: Kraftpfeil
- L: Längsachse
- Q: Querebene

## Patentansprüche

1. Baugruppe, umfassend ein erstes äußeres Bauteil (53), ein zweites äußeres Bauteil (57)
und ein bezogen auf eine Stapelrichtung (51) in Längsrichtung zwischen den beiden äußeren Bauteilen (53, 57) angeordnetes Mittelbauteil (56c), wobei das erste äußere Bauteil (53) zumindest einen ersten Vorsprung (55) aufweist, der sich von einer dem Mittelbauteil (56c) zugewandten Außenfläche (54) des ersten äußeren Bauteils (53) in der Stapelrichtung (51) zu dem Mittelbauteil (56c) erstreckt, und das Mittelbauteil (56c) verformbar ausgebildet und infolge einer Kraftwirkung des zumindest einen ersten Vorsprungs (55) verformt ist, **dadurch gekennzeichnet, dass** das Mittelbauteil (56c) derart ausgebildet und/oder angeordnet ist, dass es vor der Kraftwirkung im Längsschnitt einen Querschnittsverlauf aufweist, welcher abschnittweise gegenüber eine Querebene versetzt verläuft und einen zumindest abschnittsweise tellerfederförmigen Querschnittsverlauf aufweist, wobei das Mittelbauteil (56c) ein Filtersieb (41) umfasst und das zweite äußere Bauteil (57) als Filterträger ausgebildet ist.

2. Baugruppe nach Anspruch 1, **dadurch gekennzeichnet, dass** das zweite äußere Bauteil (57) zumindest einen zweiten Vorsprung (59) aufweist, der sich von einer dem Mittelbauteil (56c) zugewandten Außenfläche (58) des zweiten äußeren Bauteils (57) in der Stapelrichtung (51) zu dem Mittelbauteil (56a, 56b, 56c) erstreckt, und das Mittelbauteil (56c) infolge der Kraftwirkung des zumindest einen zweiten Vorsprungs (59) verformt ist.

3. Baugruppe nach einem der vorhergehenden Ansprüche, **dadurch gekennzeichnet, dass** der zumindest eine erste Vorsprung (55) und der zumindest eine zweite Vorsprung (59) in einer sich zu der Stapelrichtung (51) senkrecht erstreckenden Breitenrichtung zueinander beabstandet angeordnet sind.

4. Baugruppe nach Anspruch 2, **dadurch gekennzeichnet, dass** der zumindest eine erste Vorsprung (55) und der zumindest eine zweite Vorsprung (59) mit dem Mittelbauteil (56c) in einer infolge der Verformung des Mittelbauteils (56c) formschlüssigen Anlage sind.

5. Baugruppe nach einem der vorhergehenden Ansprüche, **dadurch gekennzeichnet, dass** jedes der drei Bauteile (53, 56c, 57) eine Zylinderform aufweist und diese drei Bauteile (53, 56c, 57) gemeinsam eine Zylinderachse definieren, welche sich in der Stapelrichtung (51) erstreckt.

6. Baugruppe nach einem oder mehreren der vorhergehenden Ansprüche, **dadurch gekennzeichnet, dass** der zumindest eine erste Vorsprung (55) und/oder der zumindest eine zweite Vorsprung (59) eine Ringform aufweist und sich bezogen auf die Stapelrichtung (51) in einer Umfangsrichtung erstreckt und/oder der zumindest eine erste Vorsprung (55) und/oder der zumindest eine zweite Vorsprung (59) als eine Rippe oder als eine Spitze ausgebildet ist/sind und/oder eine Spitze aufweisen und/oder im Querschnitt gesehen dreieckig oder spitz ausgebildet ist.

7. Ventil mit einem Ventilgehäuse (2), **gekennzeichnet durch** eine in einer Ausnehmung (21) des Ventilgehäuses (2) angeordnete Baugruppe (5) nach einem der Ansprüche 1 bis 6, wobei eine Scheibe, vorzugsweise eine zweite Ventilscheibe (37) des Ventils (1), das erste Bauteil (53) bildet.

8. Verfahren zum Montieren einer Baugruppe (5), nach einem der Ansprüche 1 bis 6, umfassend die Schritte:
a. Bereitstellen eines ersten äußeren Bauteils (53) der Baugruppe (5);
b. Festlegen der Stapelrichtung (51) der Baugruppe (5) bezogen auf das erste äußere Bauteil (53);
c. Anordnen eines Mittelbauteils (56c) der Baugruppe (5) bezogen auf die Stapelrichtung (51) der Baugruppe (5) benachbart zu dem ersten äußeren Bauteil (53);
d. Anordnen eines zweiten äußeren Bauteils (57) der Baugruppe (5) bezogen auf die Stapelrichtung (51) benachbart zu dem Mittelbauteil (56c);
e. Beaufschlagen des Mittelbauteils (56c), bevorzugt des äußeren zweiten Bauteils (57), mit einer in der Stapelrichtung (51) wirkenden Kraft, derart, dass sich das Mittelbauteil (56c) von zumindest einem ersten Vorsprung (55), der sich von einer dem Mittelbauteil zugewandten Außenfläche (54) des ersten äußeren Bauteils (53) in der Stapelrichtung (51) erstreckt, infolge der Kraftwirkung verformt wird.

9. Verfahren zum Montieren eines Ventils (1), nach Anspruch 7, umfassend die Schritte:
a. Bereitstellen eines Ventilgehäuses (2);
b. Anordnen einer Ventileinheit (3) in einer Ausnehmung (21) des Ventilgehäuses (2);
c. Anordnen einer Baugruppe als Filteranordnung (4) in der Ausnehmung (21) bezogen auf die Tiefenrichtung (22) benachbart zu der Ventileinheit (3) und in Anlage mit der Ventileinheit (3), wobei die zweite Ventilscheibe (37) der Ventileinheit (3) ein der Ventileinheit (3) und der Filteranordnung (4) gemeinsames Bauteil ist;
d. Beaufschlagen der Filteranordnung (4), insbesondere des äußeren Bauteils (57) der Filteranordnung (4), mit einer in der Tiefenrichtung (22) wirkenden Kraft;
e. Verformen des Mittelbauteils (56c) infolge der Kraftwirkung derart, dass die Filteranordnung (4) in der Tiefenrichtung (22) der Ausnehmung (21) eine verglichen mit einem unbelasteten Zustand kürzere vorbestimmte Ausdehnung (50) aufweist.

## Claims

1. Assembly comprising a first outer component (53), a second outer component (57), and a middle component (56c) which is arranged between the two outer components (53, 57) with respect to a stacking direction (51) in a longitudinal direction, wherein the first outer component (53) has at least one first projection (55) which extends from an outer surface (54), facing towards the middle component (56c), of the first outer component (53) to the middle component (56c) in the stacking direction (51), and the middle component (56c) is of deformable form and is deformed as a result of an action of force of the at least one first projection (55), **characterized in that** the middle component (56c) is formed and/or arranged in such a way that said middle component, prior to the action of force, in longitudinal section, has a cross-sectional profile which sectionally extends in a manner offset in relation to a transverse plane, and has an at least sectionally cup-spring-shaped cross-sectional profile, wherein the middle component (56c) comprises a filter screen (41) and the second outer component (57) is in the form of a filter carrier.

2. Assembly according to Claim 1, **characterized in that** the second outer component (57) has at least one second projection (59) which extends from an outer surface (58), facing towards the middle component (56c), of the second outer component (57) to the middle component (56a, 56b, 56c) in the stacking direction (51), and the middle component (56c) is deformed as a result of the action of force of the at least one second projection (59).

3. Assembly according to either of the preceding claims, **characterized in that** the at least one first projection (55) and the at least one second projection (59) are arranged spaced apart from one another in a width direction which extends perpendicularly to the stacking direction (51).

4. Assembly according to Claim 2, **characterized in that** the at least one first projection (55) and the at least one second projection (59) are in abutment in a form-fitting manner, as a result of the deformation of the middle component (56c), with the middle component (56c).

5. Assembly according to one of the preceding claims, **characterized in that** each of the three components (53, 56c, 57) has the shape of a cylinder and these three components (53, 56c, 57) together define a cylinder axis which extends in the stacking direction (51).

6. Assembly according to one or more of the preceding claims, **characterized in that** the at least one first projection (55) and/or the at least one second projection (59) have/has the shape of a ring and, with respect to the stacking direction (51), extend(s) in a circumferential direction, and/or the at least one first projection (55) and/or the at least one second projection (59) are/is in the form of a rib or in the form of a tip and/or have/has a tip and/or, as seen in cross section, are/is of triangular or pointed form.

7. Valve having a valve housing (2), **characterized by** an assembly (5) according to one of Claims 1 to 6 that is arranged in a cutout (21) of the valve housing (2), wherein a disc, preferably a second valve disc (37) of the valve (1), forms the first component (53).

8. Method for assembling an assembly (5) according to one of Claims 1 to 6, comprising the steps of:
a. providing a first outer component (53) of the assembly (5);
b. defining the stacking direction (51) of the assembly (5) with respect to the first outer component (53);
c. arranging a middle component (56c) of the assembly (5) adjacent to the first outer component (53) with respect to the stacking direction (51) of the assembly (5);
d. arranging a second outer component (57) of the assembly (5) adjacent to the middle component (56c) with respect to the stacking direction (51) ;
e. subjecting the middle component (56c), preferably the outer second component (57), to a force acting in the stacking direction (51), in such a way that, as a result of the action of force, the middle component (56c) is deformed by at least one first projection (55) which extends from an outer surface (54), facing towards the middle component, of the first outer component (53) in the stacking direction (51).

9. Method for assembling a valve (1) according to Claim 7, comprising the steps of:
a. providing a valve housing (2);
b. arranging a valve unit (3) in a cutout (21) of the valve housing (2);
c. arranging an assembly as a filter arrangement (4) in the cutout (21) adjacent to the valve unit (3), and in abutment with the valve unit (3), with respect to the depth direction (22), wherein the second valve disc (37) of the valve unit (3) is a component common to the valve unit (3) and the filter arrangement (4);
d. subjecting the filter arrangement (4), in particular the outer component (57) of the filter arrangement (4), to a force acting in the depth direction (22);
e. deforming the middle component (56c) as a result of the action of force in such a way that, in the depth direction (22) of the cutout (21), the filter arrangement (4) has a predetermined extent (50) which is shorter in comparison with an unloaded state.

## Revendications

1. Ensemble, comprenant un premier composant extérieur (53), un deuxième composant extérieur (57) et un composant central (56c) agencé dans la direction longitudinale entre les deux composants extérieurs (53, 57) par rapport à une direction d'empilement (51), le premier composant extérieur (53) présentant au moins une première saillie (55), qui s'étend depuis une surface extérieure (54) du premier composant extérieur (53) tournée vers le composant central (56c) dans la direction d'empilement (51) vers le composant central (56c), et le composant central (56c) étant configuré sous forme déformable et étant déformé en raison d'une action de force de l'au moins une première saillie (55), **caractérisé en ce que** le composant central (56c) est configuré et/ou agencé de telle sorte qu'il présente, avant l'action de force, en coupe longitudinale, un tracé de section transversale qui est décalé par sections par rapport à un plan transversal et présente un tracé de section transversale en forme de rondelle-ressort au moins par sections, le composant central (56c) comprenant un tamis de filtre (41) et le deuxième composant extérieur (57) étant configuré sous forme de support de filtre.

2. Ensemble selon la revendication 1, **caractérisé en ce que** le deuxième composant extérieur (57) présente au moins une deuxième saillie (59) qui s'étend depuis une surface extérieure (58) du deuxième composant extérieur (57) tournée vers le composant central (56c) dans la direction d'empilement (51) vers le composant central (56a, 56b, 56c), et le composant central (56c) est déformé en raison de l'action de force de l'au moins une deuxième saillie (59).

3. Ensemble selon l'une quelconque des revendications précédentes, **caractérisé en ce que** l'au moins une première saillie (55) et l'au moins une deuxième saillie (59) sont agencées espacées l'une de l'autre dans une direction de largeur s'étendant perpendiculairement à la direction d'empilement (51).

4. Ensemble selon la revendication 2, **caractérisé en ce que** l'au moins une première saillie (55) et l'au moins une deuxième saillie (59) sont en application par complémentarité de forme avec le composant central (56c) en raison de la déformation du composant central (56c).

5. Ensemble selon l'une quelconque des revendications précédentes, **caractérisé en ce que** chacun des trois composants (53, 56c, 57) présente une forme cylindrique et ces trois composants (53, 56c, 57) définissent ensemble un axe de cylindre qui s'étend dans la direction d'empilement (51).

6. Ensemble selon une ou plusieurs des revendications précédentes, **caractérisé en ce que** l'au moins une première saillie (55) et/ou l'au moins une deuxième saillie (59) présentent une forme annulaire et s'étendent dans une direction circonférentielle par rapport à la direction d'empilement (51) et/ou l'au moins une première saillie (55) et/ou l'au moins une deuxième saillie (59) est/sont configurées sous la forme d'une nervure ou sous la forme d'une pointe et/ou présentent une pointe et/ou sont configurées sous forme triangulaire ou pointue en section transversale.

7. Soupape avec un corps de soupape (2), **caractérisée par** un ensemble (5) selon l'une quelconque des revendications 1 à 6 agencé dans un évidement (21) du corps de soupape (2),
un disque, de préférence un deuxième disque de soupape (37) de la soupape (1), formant le premier composant (53).

8. Procédé de montage d'un ensemble (5) selon l'une quelconque des revendications 1 à 6, comprenant les étapes suivantes :
a. la fourniture d'un premier composant extérieur (53) de l'ensemble (5) ;
b. la détermination de la direction d'empilement (51) de l'ensemble (5) par rapport au premier composant extérieur (53) ;
c. l'agencement d'un composant central (56c) de l'ensemble (5) par rapport à la direction d'empilement (51) de l'ensemble (5) au voisinage du premier composant extérieur (53) ;
d. l'agencement d'un deuxième composant extérieur (57) de l'ensemble (5) par rapport à la direction d'empilement (51) au voisinage du composant central (56c) ;
e. la sollicitation du composant central (56c), de préférence du deuxième composant extérieur (57), avec une force agissant dans la direction d'empilement (51), de telle sorte que le composant central (56c) est déformé par au moins une première saillie (55) qui s'étend dans la direction d'empilement (51) depuis une surface extérieure (54) du premier composant extérieur (53) tournée vers le composant central, en raison de l'action de force.

9. Procédé de montage d'une soupape (1) selon la revendication 7, comprenant les étapes suivantes :
a. la fourniture d'un corps de soupape (2) ;
b. l'agencement d'une unité de soupape (3) dans un évidement (21) du corps de soupape (2) ;
c. l'agencement d'un ensemble en tant qu'agencement de filtre (4) dans l'évidement (21) par rapport à la direction de profondeur (22) au voisinage de l'unité de soupape (3) et en application avec l'unité de soupape (3), le deuxième disque de soupape (37) de l'unité de soupape (3) étant un composant commun à l'unité de soupape (3) et à l'agencement de filtre (4) ;
d. la sollicitation de l'agencement de filtre (4), notamment du composant extérieur (57) de l'agencement de filtre (4) avec une force agissant dans la direction de profondeur (22) ;
e. la déformation du composant central (56c) en raison de l'action de force de telle sorte que l'agencement de filtre (4) présente une extension prédéterminée (50) plus courte dans la direction de profondeur (22) de l'évidement (21) en comparaison d'un état non sollicité.
